# EUROPEAN PATENT APPLICATION

(11) **EP 1 681 264 A1**
(43) Date of publication of application: **19.07.2006**
(21) Application number: 04792172.1
(22) Date of filing: 01.10.2004
(51) Int. Cl.: C01B 31/02

(54) **FULLERENE SHELL TUBE AND METHOD FOR PRODUCING SAME**

(30) Priority: 03.10.2003 JP 2003346117
(71) Applicant: National Institute for Materials Science, Tsukuba-shi, Ibaraki 305-0047 (JP)
(72) Inventor: MIYAZAWA, K., Nat. Inst. Materials Science, Tsukuba-shi, Ibaraki 305-0047 (JP); MORI, T., Nat. Inst. Materials Science, Tsukuba-shi, Ibaraki 305-0047 (JP); NISHIMURA, C., Nat. Inst. Materials Science, Tsukuba-shi, Ibaraki 305-0047 (JP); SUGA, T., Nat. Inst. Materials Science, Tsukuba-shi, Ibaraki 305-0047 (JP)
(74) Representative: Calamita, Roberto
(86) International application number: PCT/JP2004/014878
(87) International publication number: WO 2005/033008

(57) **Abstract**

Fullerene whiskers or fibers obtained by a liquid-liquid interfacial precipitation method are heat-treated in vacuum or in a gas atmosphere at a temperature of from 500 to 1,000°C to form a fullerene shell tube which can be used in wide applications such as field emission devices, gas filters, hydrogen storage materials and catalyst supports in energy, catalyst and semiconductor industries.

## Description

### Technical Field

The invention of this application relates to a fullerene shell tube which can be used in wide applications such as field emission devices, gas filters, hydrogen storage materials and catalyst supports in various industries such as energy, chemical industries, electronics and semiconductors, and a process for producing the same.

### Background Art

Although the presence of a fullerene, was experimentally proved by researchers abroad in 1985, its structural model had been already known in Japan in 1970. Thus, Japan has always led the world in studies of fullerenes. As a typical fullerene, C₆₀ has been known. Various fullerenes such as C₇₀, C₇₆, C₇₈, C₈₂, C₈₄, C₂₄₀, C₅₄₀ and C₇₂₀ other than C₆₀ have been known. The technology in the field of fullerenes has been progressed very quickly, and new fullerene compounds have been introduced one after another. Recently, a process in which a shell structure comprising amorphous carbon derived from fullerene is formed by heat-treating crystals of typical fullerene C₆₀ in vacuum (non-Patent Document 1), a process in which fullerene whiskers (carbon filaments) are produced by a liquid-liquid interfacial precipitation method, and the like have been proposed by the inventors of this application (for example, Patent Document 1 and non-Patent Documents 2 and 3).

Meanwhile, as a tube having a carbon wall structure, a carbon nanotube has been known.

This carbon nanotube has a structure in which a graphite sheet is cylindrically rolled up. Unlike such a structure of the carbon nanotube, a structure of a fullerene shell tube derived from a fullerene whisker (FW) or a fullerene nanowhisker (FNW) having a three-dimensional periodical structure in which symmetry of fullerene needle crystals or the like is defined by a space group has been imagined. It has been so far known that a fullerene shell is formed by heat-treating crystals of a fullerene, but a tubular fullerene shell (hereinafter referred to as a fullerene shell tube) or a process for producing the same has been to date utterly unknown.

### Patent Document 1: JP-A 2003-1600

non-Patent Document 1: H. Sakuma, M. Tachibana, H. Sugiura, K. Kojima, S. Ito, T. Sekiguchi, Y. Achiba, J. Mater, Res., 12(1997)1545.
non-Patent Document 2: K. Miyazawa, Y. Kuwasaki, A. Obayashi and M. Kuwabara, "C60 nanowhiskers formed by the liquid-liquid interfacial precipitation method", J. Mater, Res., 17[1](2002)83.
non-Patent Document 3: Kunichi Miyazawa "C70 Nanowhiskers Fabricated by Forming Liquid/Liquid Interfaces in the Systems of Toluene Solution of C70 and Isopropyl Alcohol", J. Am. Ceram. Soc., 85[5] (2002) 1297.

In view of the structure, it is expected that the fullerene shell tube can be used in applications such as hydrogen storage materials, catalyst supports, new semiconductors, field emission materials and fuel cell electrode materials. However, as stated earlier, the fact is that a process for producing a fullerene shell tube and various possibilities of this fullerene shell tube structure have been unknown.

Accordingly, the invention of this application aims to provide a fullerene shell tube expected as a new functional material and a process for producing the same.

### Disclosure of the Invention

In order to solve the foregoing problems, the invention first provides a process for producing a fullerene shell tube, which comprises heat-treating a fullerene whisker or fiber at a temperature of from 500 to 1,000°C.

Second, it provides the process for producing the fullerene shell tube, wherein the fullerene is C₆₀ fullerene, a higher-order fullerene having the carbon number of 70 or more, a metal-containing fullerene or fullerene derivatives.

The invention of this application third provides a fullerene shell tube in which a diameter is in the range of from 10 nm to 100 µm, and a length is 100 nm or more.

Fourth, it provides the fullerene shell tube, wherein the tube wall comprises crystalline carbon or amorphous carbon.

Fifth, it provides the fullerene shell tube, wherein the end of the tube is closed or open.

Sixth, it provides the fullerene shell tube, wherein the inside is hollow, or the inside is filled.

### Brief Description of the Drawings

Fig. 1 is a transmission electron microscope (TEM) photograph of a fullerene shell tube produced by heating a fullerene nanowhisker in vacuum at 600°C for 30 minutes.
Fig. 2 is a transmission electron microscope (TEM) photograph of a fullerene shell tube produced by heating a fullerene nanowhisker in vacuum at 700°C for 30 minutes.
Fig. 3 is a transmission electron microscope (TEM) photograph of a fullerene shell tube produced by heating a fullerene nanowhisker in vacuum at 600°C for 30 minutes.
Fig. 4 is a transmission electron microscope (TEM) photograph of a fullerene shell tube with a filling tissue thereinside which tube is produced by heating a fullerene nanowhisker in vacuum at 600°C for 30 minutes.

### Best Mode for Carrying Out the Invention

The invention of this application has the foregoing characteristics. The embodiment thereof is described below.

In the invention of this application, the fullerene shell tube is produced by heat-treating various fullerene whiskers or fibers at the temperature of from 500 to 1,000°C. In this instance, the fullerene includes not only typical C₆₀ whiskers or fibers, but also whiskers or fibers of higher-order fullerenes having the carbon number of 70 or more, metal-containing fullerenes and further various fullerene derivatives which have been so far known.

These various fullerene whiskers or fibers to be heat-treated can be prepared by a so-called liquid-liquid interfacial precipitation method, as proposed by the inventors of this application in the foregoing Patent Document 1 or the like, which comprises dissolving a fullerene in a first solvent such as toluene, xylene, benzene, hexane, pentane or CS₂, adding to the solution a second alcoholic solvent which has a lower solubility than that of the first solvent and is not mixed therewith immediately, such as pentanol, butyl alcohol, isopropyl alcohol, n-propyl alcohol, methanol or ethanol, and precipitating whiskers or fibers which are needle crystals of the fullerene in the liquid-liquid interface of the first and second solvents while keeping the mixture at near room temperature (from 3°C to 30°C).

The heating at the temperature of from 500°C to 1,000°C is conducted in vacuum or in a gas atmosphere. In this case, it is considered that a degree of vacuum is a pressure of 1 Pa or less, the gas atmosphere is an oxygen partial pressure of 10⁻¹ Pa or less, and the like. An inert gas such as argon may be present.

The invention is thus illustrated more specifically below by referring to Example. Of course, the invention is not limited by the following Example.

### Example

### <Example 1>

According to a liquid-liquid interfacial precipitation method, 30 ml of isopropyl alcohol is first gently added to 30 ml of toluene saturated with fullerene (C₆₀) having a purity of 99.5 %. The solution is kept at room temperature (from 15°C to 21°C) for approximately 50 hours to produce a fullerene nanowhisker. Subsequently, the resulting fullerene nanowhisker is retained in vacuum at 600°C, and heat-treated for 30 minutes to produce a fullerene shell tube having a wall of amorphous carbon.

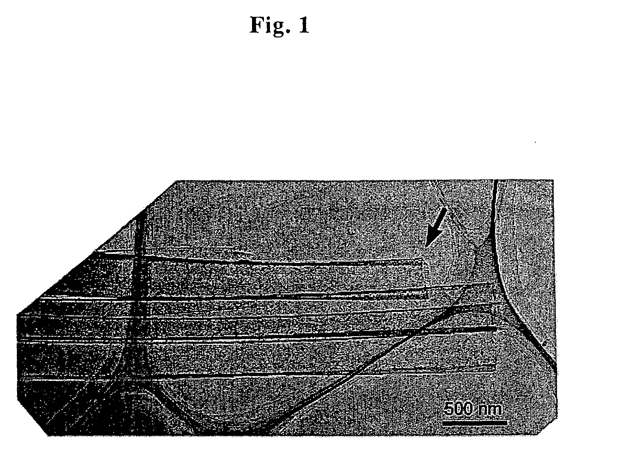

Fig. 1 is a transmission electron microscope (TEM) photograph of the resulting fullerene shell tube. As shown in the photograph, the fullerene shell tube made of the fullerene nanowhisker has a nanometer-order diameter, and it is confirmed, as shown by the arrow, that a polygonal wall structure is present by reflecting the crystal habit surface of the original fullerene nanowhisker. Incidentally, the crystal habit here referred to indicates characteristics of the size and the form of the crystal.

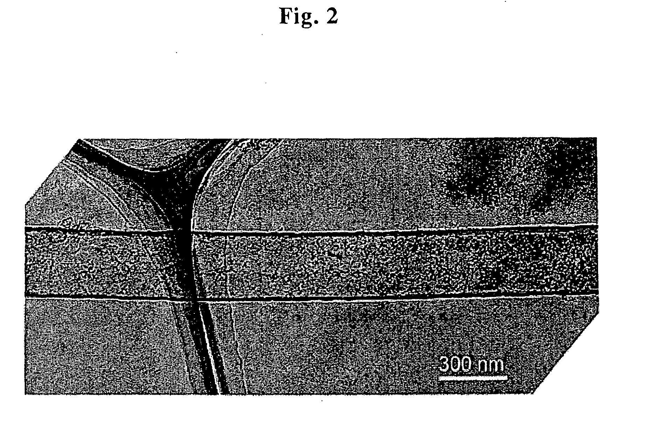

Fig. 2 is a transmission electron microscope (TEM) photograph of a fullerene shell tube wall produced by heating a fullerene nanowhisker in vacuum at 700°C for 30 minutes. From the transmission electron microscope photograph, it is confirmed that the fullerene shell tube wall comprises amorphous carbon and has a thickness of approximately 30 nm.

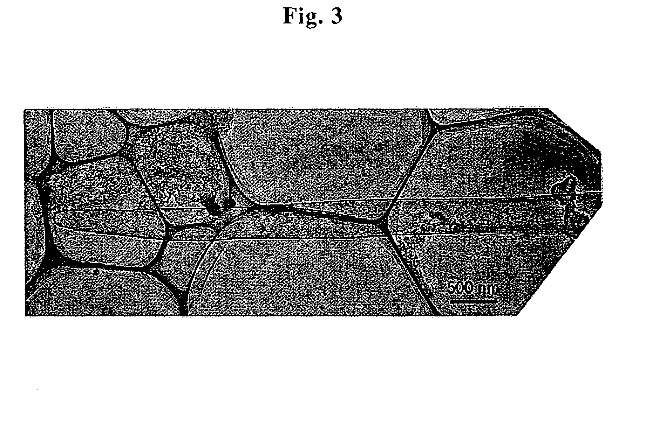

Fig. 3 is a transmission electron microscope (TEM) of the fullerene shell tube wall.

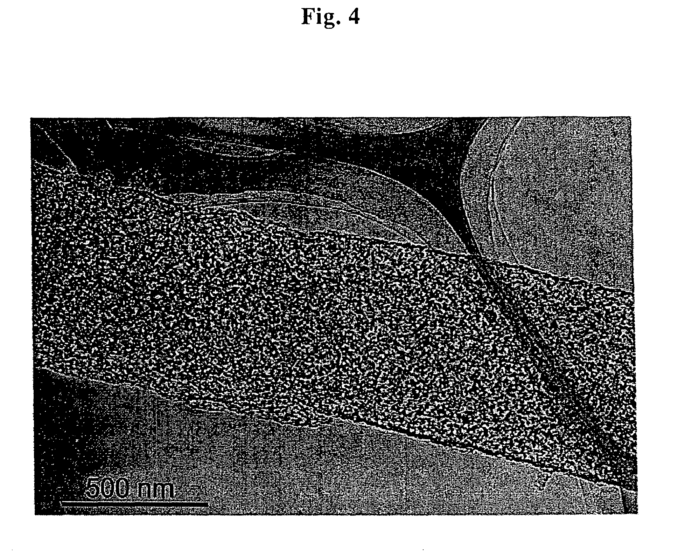

As shown in Fig. 3, it is observed that the end of the fullerene shell tube is sometimes closed. It is further observed, as shown in Fig. 4, that the inside of the fullerene shell tube has a filling tissue. Amorphous carbon is presumably filled during formation of the shell tube structure.

Of course, the invention of this application is not limited to the foregoing embodiment and Example. Regarding the details, various embodiments are possible.

### Industrial Applicability

According to a process for producing a fullerene shell tube in the first invention of this application, a fullerene shell tube useful as a functional material in wide applications such as field emission devices, gas filters, hydrogen storage materials and catalyst supports in energy, catalyst and semiconductor industries.

According to a process for producing a fullerene shell tube in the second invention, the foregoing effect is obtained, and it is further possible to select a fullerene which can be used advantageously.

According to the third invention, a fullerene shell tube having a specific size is provided.

According to the fourth invention, the foregoing effect is obtained, and further a shape of a carbon wall constituting the fullerene shell tube is specified.

According to the fifth invention, the foregoing effect is obtained, and further a structure of an end of the fullerene shell tube wall is specified.

According to the sixth invention, a state of the inside of the fullerene shell tube is specified.

The fullerene shell tube obtained in the invention of this application is useful as a new functional material in wide applications such as field emission devices, gas filters, hydrogen storage materials and catalyst supports in various industries such as energy, chemical industries, electronics and semiconductors.

## Claims

1. A process for producing a fullerene shell tube, which comprises heat-treating a fullerene whisker or fiber at a temperature of from 500 to 1,000°C.

2. The process for producing the fullerene shell tube according to claim 1, wherein the fullerene is C₆₀ fullerene, a higher-order fullerene having the carbon number of 70 or more, a metal-containing fullerene or fullerene derivatives.

3. A fullerene shell tube in which a diameter is in the range of from 10 nm to 100 µm, and a length is 100 nm or more.

4. The fullerene shell tube according to claim 3, wherein the tube wall comprises crystalline carbon or amorphous carbon.

5. The fullerene shell tube according to claim 3 or 4, wherein the end of the tube is closed or open.

6. The fullerene shell tube according to any of claims 3 to 5, wherein the inside is hollow, or the inside is filled.
